(19) Europäisches Patentamt
European Patent Office
Office européen des brevets

(11) Veröffentlichungsnummer: **0 487 762 A1**

# (12) EUROPÄISCHE PATENTANMELDUNG

(21) Anmeldenummer: **90122602.7**

(51) Int. Cl.5: **E04B 1/61**

(22) Anmeldetag: **27.11.90**

(43) Veröffentlichungstag der Anmeldung:
**03.06.92 Patentblatt 92/23**

(84) Benannte Vertragsstaaten:
**AT CH DE ES FR GB IT LI NL**

(71) Anmelder: **RITTERWAND GMBH METALL-SYSTEMBAU**
**Rösseweg 5-7**
**W-7045 Nufringen(DE)**

(72) Erfinder: **Heinsen, Horst, Dipl.-Ing.**
**Lorcher Strasse 36**
**W-7140 Ludwigsburg-Ossweil(DE)**
Erfinder: **Kissling, Klaus, Dipl.-Ing.**
**Schneebergstrasse 5**
**W-7033 Herenberg(DE)**

(74) Vertreter: **Raeck, Wilfrid, Dipl.-Ing.**
**Moserstrasse 8**
**W-7000 Stuttgart 1(DE)**

## (54) Lösbare Verbindung zwischen Trennwandabschnitten.

(57) Anschlußsystem für die horizontalen Stirnflächen von Wandabschnitten einer Trennwand, bei dem die raumhohen Wandabschnitte mit einer Bodenverankerung sowie mit einem abgedichteten Deckenanschluß verbunden sind. Die Unterseite jedes raumhohen Wandabschnittes (10) besitzt ein Anschlußprofil mit einer von unten zugänglichen längsverlaufenden V-Nut (20), welche die Aufnahme für einen dachförmigen Vorsprung (25) eines an einer Bodenschiene (42) höhenverstellbaren Ausgleichsprofils (24) bildet, wobei aufgrund des Eigengewichtes des Wandabschnittes eine formschlüssig zentrierte Verbindung entsteht. Das Ausgleichsprofil (24) trägt nach oben gerichtete, mit dem Anschlußprofil (18) zusammenwirkende Dichtleisten (38) sowie an seitlichen senkrechten Schenkeln (40) befestigte seitliche Abdeckleisten (54) mit Lippendichtungen, die an der Unterkante des Wandabschnittes sowie am Boden anliegen.

EP 0 487 762 A1

Die Erfindung betrifft eine lösbare Verbindung zwischen den senkrechten Stirnflächen benachbarter Wandabschnitte einer Trennwand, insbesondere Reinraumwand durch die jeder integrale oder aus niedrigeren Paneel- und/oder Fensterelementen zusammengesetzte raumhohe Wandabschnitt über die Höhe seiner Seitenkanten gegenüber seinem benachbarten Wandabschnitt mit Dichtungseinrichtungen abgedichtet und bezüglich quer und längs zur Wand gerichteter Kräfte gesichert ist.

Reinraumwände, die beispielsweise in der Pharmaindustrie angewendet werden, müssen in der Lage sein, aufgrund ihrer besonders ausgeprägten Abdichtungseigenschaften einen Sterilraum gegenüber einer normalen Außen- oder Umgebungsatmosphäre weitgehend partikelfrei abzudichten. Üblicherweise bestehen die Wandabschnitte von Reinraumwänden aus beidseitigen metallischen Deckblechen, deren Abstand von etwa 5 bis 10 cm eine geeignete Füllung enthält, z. B. durch einen geschlossenzelligen Hartschaumstoff ausgeschäumt ist. Ein Nachteil des bekannten Trennwandsystems besteht darin, daß die einzelnen, nebeneinander aufgestellten Wandabschnitte fest miteinander verriegelt und verschraubt sind, so daß aus der so gebildeten Trennwand weder einzelne Wandabschnitte noch einzelne Paneele z. B. zum Auswechseln, Ersatz oder Umbau herausgenommen werden können, ohne daß der gesamte Wandaufbau zerstört bzw. hinsichtlich der bestehenden Verbindung aufgelöst werden muß. Um beim Aufstellen von Trennwänden die einzelnen raumhohen Wandabschnitte abgedichtet aneinanderfügen zu können, kommt es darauf an, daß die entstehenden Fugen leicht beseitigt bzw. durch einfache Arbeitsgänge überbrückt und abgedichtet werden können.

Der Erfindung liegt die Aufgabe zugrunde, eine Verbindung für die senkrechten Stirnflächen benachbarter Wandabschnitte einer Trennwand, insbesondere Reinraumwand der eingangs bezeichneten Art zu schaffen und dahingehend auszugestalten, daß die Wandabschnitte und deren Anschlüsse aus vorgefertigten Profilen und Einzelteilen, gegebenenfalls an der Baustelle direkt, mit geringem Aufwand an Geräten und Handhabungen herstellbar sind und daß sich die Durchführung der Verbindung und Abdichtung benachbarter Wandabschnitte einfach und montagefreundlich gestaltet, so daß insbesondere ein leichtes Lösen der Verbindung möglich wird, um aufgestellte Trennwände an anderer Stelle oder für eine andere Raumaufteilung weiterverwenden zu können. Zur Erfindungsaufgabe gehört als weiteres wichtiges Ziel die Schaffung einer planparallelen Wandfläche sowohl bei mehreren übereinandergesetzten Paneel- und/oder Glaselementen oder auch bei den nebeneinander aufgestellten Wandabschnitten. Diese angestrebte Ebenflächigkeit dient nicht nur einer äußeren klaren Linienführung, sondern bildet erst die Voraussetzung der bei Reinraumwänden zu fordernden Sauberkeit, weil sich glatte Wände leichter und vollständiger reinigen und desinfizieren lassen und Ablagerungen bzw. Rückstände von Reinigungsmitteln an vorstehenden Kanten und Profilen vermieden werden.

Gemäß der Erfindung wird diese Aufgabe durch die Merkmale des Anspruches 1 gelöst, wonach jeder Wandabschnitt an seinen senkrechten Stirnseiten ein metallisches Begrenzungsprofil aufweist, das in einer nach außen offenen ersten Kammer von beiden Seiten einwärts gerichtete Vorsprünge enthält, während eine zweite Kammer als Aufnahme für senkrechte Paßriegel bei der Verbindung niedrigerer Paneel- und/oder Fensterelemente untereinander dient. Die Vorsprünge an den Begrenzungsprofilen zweier benachbarter Wandabschnitte werden auf jeder Seite durch eine darauf einzurichtende Spannleiste überfaßt, die mit der gegenüberliegenden Spannleiste vorzugsweise durch Schrauben verbunden und dadurch quer zur Wand derart bewegbar ist, daß das spreizbare Spannleistenpaar die Wandabschnitte über die Höhe des gleichmäßig einjustierten Fugenabstandes festhalten. Diese Abstandsfuge, die einerseits als Zugang zur Schraubbetätigung des zu spreizenden Spannleistenpaares dient und andererseits das Aufstellen oder auch die Demontage der Wand vereinfacht, ist seitlich durch die Vorsprünge am Begrenzungsprofil und in der Tiefe durch die Spannleisten selbst abgeschlossen und wird schließlich durch eine eindrückbare nachgiebige Profilleiste abgedichtet.

Die durch die vorgenannten Merkmale gekennzeichnete neuartige Trennwandkonzeption besitzt verschiedene vorteilhafte Eigenschaften. Das metallische Begrenzungsprofil kann zugerichtet oder auf der Baustelle nach Maß in die senkrechten Stirnflächen der Wandabschnitte eingesetzt werden. Wenn ein raumhoher Wandabschnitt aus mehreren niedrigeren Paneel- und/oder Fensterelementen besteht, werden diese zunächst durch Verschieben und Verbohren senkrechter Paßriegel untereinander innerhalb der Wandebene versteift und fixiert. Benachbarte Wandabschnitte werden auf einen vorbestimmten senkrechten Abstand von gleichbleibender Fugenbreite eingerichtet, wobei die erste Kammer im Begrenzungsprofil des einen Wandabschnittes ausreicht, um das durch gemeinsame Schrauben vereinigte Spannleistenpaar aufzunehmen und dort in Bereitschaftsstellung zu halten. Die Spannleisten können durch die Abstandsfuge hindurch leicht mit Hilfe eines einfachen Werkzeuges, wie Schraubendreher in die endgültige Position zur Überfassung der Vorsprünge beider Begrenzungsprofile gebracht werden. Durch das Anziehen der Spannschrauben werden die Spannleisten gegen die Vorsprünge gespannt, so daß damit bereits eine weitgehend abgedichtete Verbindung entsteht, bei der jedoch Metallflächen aneinanderliegen. Zur vollkommenen Abdichtung und gleichzeitig zur Verkleidung und zum Verschließen der Fuge wird dort von beiden Seiten jeweils eine nachgiebige Profilleiste eingedrückt, die sowohl an den Seitenflächen der Vorsprünge als auch mit angeformten Lippen in einer Aufnahmenut der Spannleiste anliegt und ihre Dichtwirkung ausübt.

In Weiterbildung der lösbaren Trennwandverbindung gemäß der Erfindung kann das metallische Begrenzungsprofil mit seinem Umfang in die Füllung des Wandabschnittes eingeklebt und mit den beidseitigen Vorsprüngen der ersten Kammer in der Stirnfläche des Wandabschnittes bündig angeordnet sein. Vorzugsweise sind die die Vorsprünge bildenden Profilwandabschnitte des Begrenzungsprofils nach außen durch Ansätze soweit verlängert, daß sie die Stirnseite der Wandfüllung bis zu den Deckplatten des Wandaufbaus abschließen.

In weiterer Ausgestaltung der Erfindung wird vorgeschlagen, daß das für ein Fensterelement bestimmte Begrenzungsprofil auf beiden Seiten nach außen offene Längsnuten zur Aufnahme einer Gummidichtung aufweist, mit denen es zwischen den beiden äußeren Glasscheiben abgedichtet gehalten ist, während zwischen einer die jeweilige Längsnut seitlich abschließenden Querwand und dem mit der Stirnseite des Glaselementes bündigen Vorsprung ein mit Silikondichtungsmasse auszufüllender Abstandsraum vorgesehen ist, der sich bis zur Stirnseite des Glaselementes erstreckt.

Gemäß einem anderen vorteilhaften Merkmal kann die Abschlußwand zwischen den beiden Kammern des Begrenzungsprofils von außen über die erste Kammer zugängliche schmale Positionierungsnuten zum Ansetzen eines Bohrers aufweisen, um den innerhalb der zweiten Kammer verschiebbaren Paßriegel nach dessen Vorschieben bis in das vertikal benachbarte Wandelement zu verbohren bzw. zu verschrauben. Die in der zweiten Kammer verschiebbaren Paßriegel dienen zur vertikalen Ausrichtung und Querversteifung zweier oder mehrerer niedrigerer Wandpaneele oder Glaselemente innerhalb des gleichen Wandabschnittes, und zwar unabhängig von der Art und Weise, wie die Verbindung und Justierung der übereinander angeordneten niedrigeren Wandelemente im einzelnen gelöst ist.

Nach einem weiteren Merkmal wird für die lösbare Trennwandverbindung vorgeschlagen, daß die Spannleisten jeweils eine zum eingestellten Fugenabstand zwischen den Wandabschnitten hin offene Nut enthalten, insbesondere eine Profilnut zur Aufnahme des mit Dichtungslippen ausgebildeten vorangehenden Endes der in den Fugenabstand einzubringenden elastischen Profilleiste. Auf diese Weise wird die Profilleiste wirksam verankert, wobei sie über das vorangehende, mit Dichtlippen versehene Ende sowohl den Zugang zu den Spannschrauben als auch die Preßverbindung zwischen Spannleiste und Vorsprung überdeckt, während die Seitenwände der Profilleiste eine zusätzliche Gesamtabdichtung der Fuge nach außen gewährleisten.

Nach einem anderen Merkmal können die Spannleisten an ihrer den Vorsprüngen des Begrenzungsprofils zugekehrten Seite eine Ausnehmung enthalten, die mindestens so breit ist, daß beide Vorsprünge die auf die Fugenbreite zueinander eingestellten Wandabschnitte aufnehmen.

Weitere Merkmale und Vorteile der erfindungsgemäßen lösbaren Verbindung ergeben sich aus den Ansprüchen, der nachfolgenden Beschreibung von Ausführungsbeispielen und aus den Zeichnungen, die sämtliche erfindungswesentliche Merkmale enthalten. Die einzelnen Merkmale, insbesondere die der Ansprüche, können für sich oder in beliebig anderer Kombination zusätzliche Ausführungsformen der Erfindung verkörpern. In den Zeichnungen zeigen,

- Fig. 1 eine schematische Ansicht einer aus verschiedenartigen Wandabschnitten zusammengestellten Trennwand,
- Fig. 2 einen horizontalen Schnitt durch eine lösbare Verbindung nach der Erfindung zwischen den senkrechten Stirnflächen zweier benachbarter Paneele,
- Fig. 3 den vertikalen Anschluß zweier Paneele an ein Eckverbindungsprofil,
- Fig. 4 zwei benachbarte Fensterprofile im voreingestellten Fugenabstand und
- Fig. 5 in gleicher Darstellung die Anordnung aus Fig. 4 nach Durchführung der Verbindung mit Hilfe von Spannleisten und nach Abdichtung des Fugenabstandes.

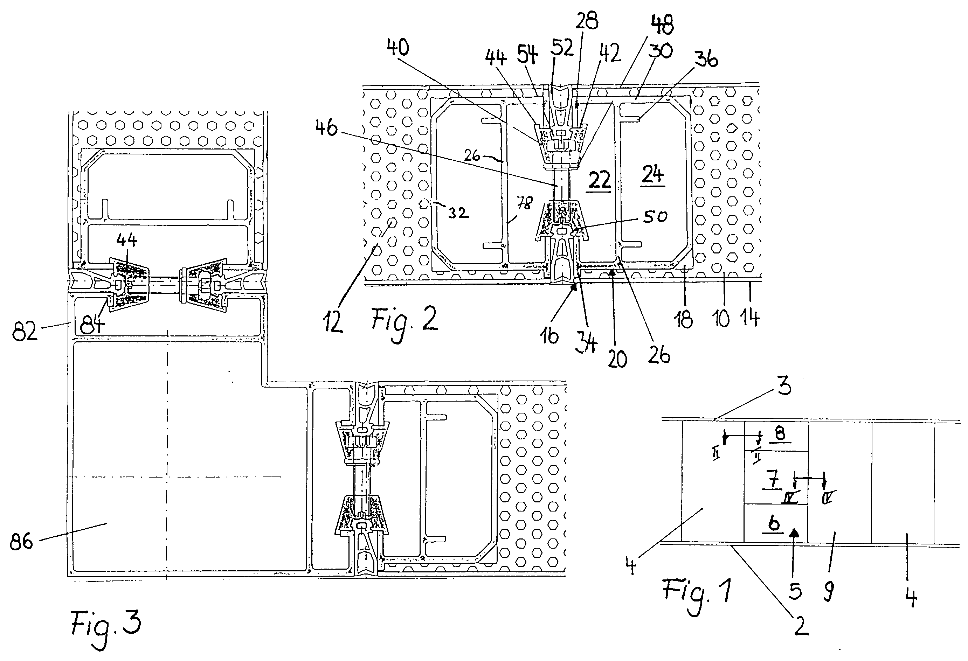

In der schematischen Übersicht einer Trennwand gemäß Fig. 1 sind zwischen einem Bodenanschluß 2 und einem Deckenanschluß 3 mehrere Wandabschnitte seitlich aneinander gereiht. Im Beispiel können die raumhohen Wandpaneele 4 aus zwei Außenhautplatten, z. B. aus Aluminium, und einer dazwischen angeordneten Hartschaumstoff-Füllung bestehen. Der rechts neben dem Wandpaneel 4 angeordnete Wandabschnitt 5 ist aus einem unteren Paneelelement 6, einem mittleren Glas- oder Fensterelement 7 und aus einem oberen Paneelelement 8 zusammengesetzt, während als dritter Wandabschnitt daneben ein raumhohes Glaselement 9 angeordnet sein kann. Die Paneelelemente 6 und 8 entsprechen in ihrem Aufbau dem des Wandpaneels 4, während die Glaselemente 7 und 9 ebenfalls, abgesehen von der Höhe, untereinander gleich sind.

Gegenstand der vorliegenden Erfindung ist die Verbindung raumhoher Wandabschnitte einer Trennwand untereinander, unabhängig von der Art, wie diese nachfolgend mit 10 bezeichneten Wandabschnitte im einzelnen aufgebaut sind.

In Fig. 2 sind zwei aus Paneelen bestehende und nebeneinander auf Fugenabstand angeordnete Wandabschnitte 10 dargestellt, die durch die nachfolgend zu beschreibenden Bestandteile der erfindungsgemäßen Verbindung einschließlich der lösbaren Spannleisten mindestens insoweit vereinigt und gesichert sind, daß bei eingestelltem Fugenabstand eine Reinraumabdichtung gewährleistet ist und Längsbewegungen der Wandabschnitte mit Sicherheit verhindert werden.

In eine von der senkrechten Stirnseite 16 eines Wandabschnittes 10 ausgehende, sich über die Höhe des Wandabschnittes erstreckende Ausfräsung 18 aus der Füllung 12 ist ein vorzugsweise aus Leichtmetall bestehendes Begrenzungsprofil 20 eingeklebt, das auch eingeschraubt sein kann. Das Begrenzungsprofil 20 enthält eine nach außen offene erste Kammer 22 und eine im gezeigten Beispiel geschlossene zweite Kammer, die mittels einer Abschlußwand 26 von der ersten Kammer abgeteilt ist.

Die zur Wandrichtung parallel verlaufenden Außenwände 30 des Begrenzungsprofils enden in einwärts zur Kammer 22 hin gerichteten Vorsprüngen 28. Die Vorsprünge 28 bilden Profilwandabschnitte, die parallel zur Abschlußwand 26 oder zur Bodenwand 32 des Begrenzungsprofils verlaufen und auf beiden Seiten im allgemeinen gleich lang sind. Die Vorsprünge 28 sind nach außen über die Breite des Begrenzungsprofils 20 durch Ansätze 34 soweit verlängert, daß sie an der Stirnseite 16 die Wandfüllung 12 bis zu den Deckplatten 14 des Wandaufbaus vollständig abdecken und an die Außenhautplatten gegebenenfalls abgedichtet anschließen.

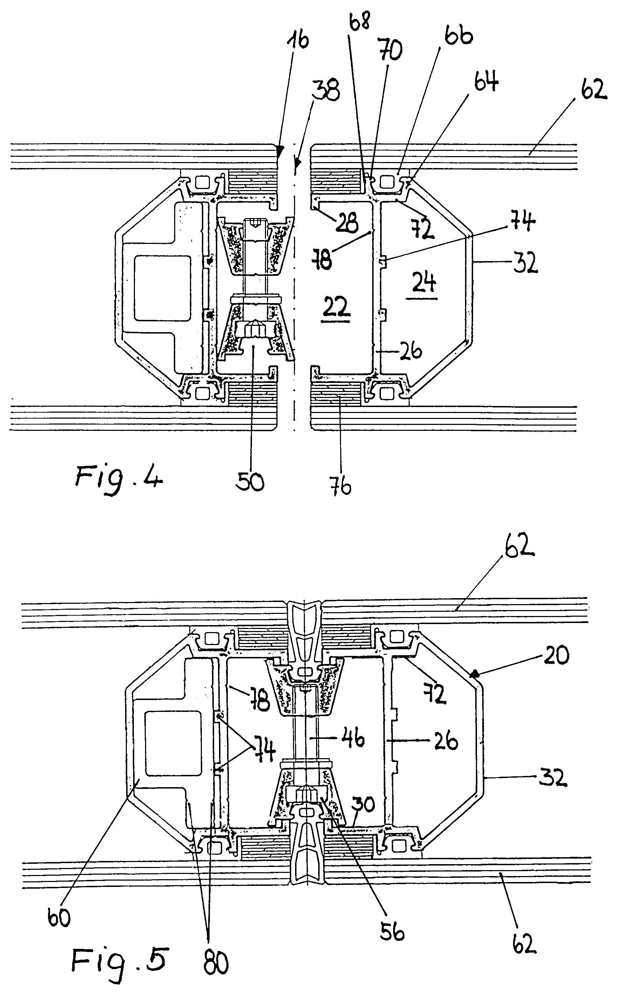

Weitere Einzelheiten der lösbaren Verbindung nach Fig. 2 ergeben sich aus der nachfolgenden Bezugnahme auf den horizontalen Schnitt durch zwei auf Fugenabstand nebeneinander eingestellte Glaselemente gemäß Fig. 4. Für diese Glaselemente besitzt das Begrenzungsprofil 20 eine unter Berücksichtigung der Außenglasstärke und der notwendigen Abdichtung dazwischen verringerte Breite, aber im übrigen eine grundsätzlich gleiche Profilform mit von beiden Seiten ausgehenden Vorsprüngen 28, die zur Sicherung des Fugenabstandes und zur Abdichtung benachbarter Wandabschnitte durch ein Spannleistenpaar überbrückt und geklemmt werden, das auch in der Verbindung gemäß Fig. 2 Anwendung findet.

Das vorzugsweise wandhohe Spannleistenpaar ist in Fig. 4 in einer außermittigen Lage eingezeichnet, in der es sich nach dem Einrichten des Fugenabstandes zwischen den beiden Wandabschnitten 10 befinden kann und aus der es durch Anwendung einfacher Hilfswerkzeuge zum Ansetzen an die und zum Überfassen der Vorsprünge 28 seitwärts bewegt werden kann.

Obwohl auch andere geeignete Querschnitte zum Überfassen und Klemmen der Vorsprünge angewendet werden können, besteht jede Spannleiste 40 gemäß Beispiel aus einem Trapezprofil, das sich über die gesamte Höhe der Wandabschnitte erstreckt. An der den Vorsprüngen 28 zugewandten Außenseite, d. h. an der größeren Trapezgrundfläche, enthält die Spannleiste eine Ausnehmung 42, die an beiden Seiten durch vorspringenden Ränder 44 begrenzt ist. Die mit ihren kleineren Trapezgrundflächen einander gegenüberstehenden Spannleisten 40 sind durch mehrere, über die Höhe des Spannleistenpaares vorzugsweise gleichmäßig verteilte Spannschrauben 46 verbunden. Bezüglich der Spannschrauben 46 können beliebige praktische Maßnahmen getroffen sein, um das Spannleistenpaar zu halten, zu spreizen und zusammenzuziehen. Unter Bezugnahme auf die Zeichnungen können die unter senkrechten Abständen angeordneten Spannschrauben 46 mit ihrem Kopfende in einer Spannleiste 46 axial fixiert drehbar sein, während ihr Gewindeschaftende in einer Gewindebohrung der anderen Spannleiste 40 aufgenommen ist. Entsprechend der Darstellung ist das Kopfende der Schrauben mittels eines z. B. in einer Umfangsnut aufgenommenen Sprengringes 48 axial festgelegt, wobei das in einer Durchgangsbohrung der einen Spannleiste 40 gelagerte rückwärtige Schaftende glattwandig ausgeführt sein kann. Ein Innensechskant des in einer von der Aufnahmenut 50 ausgehenden Ansenkung aufgenommenen Schraubenkopfes ist durch die Abstandsfuge und durch die Aufnahmenut 50 hindurch zur Schraubenbetätigung zugänglich.

Gemäß einer anderen, nicht gezeigten Variante können die Spannleisten 40 jedes Spannleistenpaares durch unter senkrechten Abständen angeordnete Führungsstifte höhenmäßig zueinander ausgerichtet sein. Die in der einen Spannleiste festen Führungsstifte erstrecken sich durch Führungsbohrungen in der anderen Spannleiste, um so eine geführte Spreizbarkeit des Spannleistenpaares zu erreichen. Außerdem sind in eine Spannleiste unter senkrechten Abständen zueinander angeordnete Spannschrauben in Gewindebohrungen aufgenommen, und das insbesondere verbreiterte Kopfende der Spannschrauben liegt an der gegenüberliegenden Spannleiste an, um die Spreizwirkung des Spannleistenpaares herbeizuführen. Zur Betätigung ist ein Innensechskant des Spannschraubenkopfes durch eine ausgerichtete Bohrung in der am Schraubenkopf anliegenden Spannleiste zugänglich.

Die Spannleisten 40 legen sich im Bereich ihrer Ausnehmung 42 an die freien Enden der Vorsprünge 40 an, so daß durch weiteres Spreizen der sich über die Höhe der Wandabschnitte erstreckenden Spannleisten 40 die Wandabschnitte untereinander mindestens so weit verspannt und gedichtet werden, daß die abschließend in den Fugenabstand 38 eingeführte nachgiebige Profilleiste 52 das vollständige Abdichten der Fuge zu übernehmen in der Lage ist. Die sich über die Raumhöhe erstrekkende nachgiebige Profilleiste 52 trägt am vorangehenden Ende eine angeformte Lippendichtung 54, die nach Überwindung einer leichten Vorspannung in eine Aufnahmenut 50 eindrückbar ist, um mit den z. B. in Fig. 5 gezeigten Formgebungen der Nut und der dort angepaßten Lippendichtung den metallischen Anlagebereich zwischen Vorsprüngen 28 und Spannleisten 40 vollständig abzudichten. Zum weiteren Abdichten und Verschließen des Fugenraumes 38 trägt auch die elastische Anlage der Seitenwände der Profilleiste 52 an den Stirnwänden 16 der Wandabschnitte 10 bei.

Das Ausführungsbeispiel gemäß Fig. 3 zeigt ein an ein Wand-Eckprofil 86 angeformtes oder auf andere Art an einer Gebäudewand befestigtes raumhohes metallisches Anschlußprofil 82, das ungefähr dem Bereich der ersten Kammer 22 eines Begrenzungsprofils 20 entspricht. Die von beiden Wandseiten des Anschlußprofils 82 aus einwärts gerichteten Vorsprünge 28 besitzen einen verbreiterten Abschnitt 84, dessen Breite so bemessen ist, daß sie zusammen mit dem unter Fugenabstand 38 gehaltenen Vorsprung 28 des gegenüberliegenden Wandabschnittes 10 die Ausnehmung 42 der Spannleiste 40 vollständig ausfüllen. Somit überfassen hier die äußeren Ränder 44 der Ausnehmung 42 der Spannleiste 40 die Vorsprünge 28 formschlüssig und sorgen dadurch für einen in sich versteiften Anschluß des Wand-Eckprofils an die im Raum an Boden und Decke befestigten stehenden Wandabschnitte.

Hinsichtlich der Standfestigkeit der Wandabschnitte und der Belastbarkeit der mit den Spannleisten 40 hergestellten Verspannung sei bemerkt, daß jeder Wandabschnitt 10 zwischen einer am Boden befestigten Deckenschiene 3 mit solch hinreichender Festigkeit angeschlossen ist, daß dadurch sämtliche vorhersehbare, auf die Wand einwirkende Querkräfte aufgenommen werden. Die zusätzlich mit Hilfe der Spannleisten 40 herbeigeführte Sicherung der Wandabschnitte dient auch der vertikalen Verspannung, d. h. der Aufrechterhaltung der vertikalen Geradelinigkeit der Kanten und der Ebenflächigkeit der Wandabschnitte untereinander. Dies ist die Voraussetzung für eine sorgfältige und wirksame Abdichtung im Bereich der senkrechten Abstandsfuge.

Die mit ihren senkrechten Stirnflächen 16 nebeneinander angeordneten Glaselemente gemäß Fig. 4 und 5 besitzen ein weitgehend ähnliches Begrenzungsprofils 20 wie die Wandpaneele nach Fig. 2 und 3. Das für ein Glas- oder Fensterelement bestimmte Begrenzungsprofil ist lediglich etwas schmäler und enthält auf beiden Seiten von seinen Außenwänden 30 aus nach außen gerichtete Längsnuten 64 zur Aufnahme einer Silikongummidichtung 66. Mit Hilfe dieser Dichtungen wird das Begrenzungsprofil zwischen den beiden äußeren Glasscheiben 62 abgedichtet festgehalten. Um die eine freie Seitenwand 70 der Längsnut 64 herum erstreckt sich eine an der Dichtung 66 angeformte Lippe 68, die einen sorgfältig abgedichteten Anschluß bildet zu einer über die Höhe des Glaselementes gebildeten, mit Silikondichtungsmasse ausgefüllten Dichtungsfuge. Diese Dichtungsfuge, deren Boden durch die Lippe 68 gebildet ist, wird auf der einen Seite durch das Außenglas 62 und auf der anderen Seite durch die Außenwand 30 des Begrenzungsprofils gebildet. Wie zuvor gehen von der Außenwand 30 einwärts in die Kammer 22 gerichtete Vorsprünge 28 aus, die in die Ausnehmung 42 der Spannleiste 40 hineinragen und gemäß Fig. 5 außen von den überstehenden Rändern 44 der Spannleisten überfaßt sind.

Die zweite Kammer 24 im Begrenzungsprofil 20 besitzt eine abgewinkelte Bodenwand 32, um die Durchsicht bzw. den Lichteinfall durch das Glaselement zu verbessern und ist im übrigen dahingehend ausgelegt, um einen in Fig. 4 und 5 im Profil gezeigten, senkrecht verschiebbaren Paßriegel 60 aufzunehmen. Der Paßriegel 60 liegt in der zweiten Kammer 24 seitlich an Führungsleisten 74 an, die von der Abschlußwand 26 ausgehen. Außerdem bilden die Bodenwände 72 der seitlichen Aufnahmenuten 64 Führungen für den verbreiterten Bodenabschnitt 4 des Paßriegels, der außerdem an der Bodenwand 32 des Begrenzungsprofils 20 geführt ist.

Wenn ein Paßriegel in ein Begrenzungsprofil des vertikal benachbarten Wandelementes beispielsweise des in Fig. 2 gezeigten Paneels verschoben wird, so setzen dort die ausgefluchtete Bodenwand 32 und andererseits die Führungsansätze 36 die äußeren seitlichen Führungen 72 aus Fig. 4 fort. Sowohl in der Abschlußwand 26 als auch in der dahinterliegenden benachbarten Fläche des Paßriegels 60 befinden sich schmale Positioniernuten 78 bzw. 80, die zum Ansetzen eines Bohrers dienen, um das Gegengewicht, nachdem es bis in das vertikal benachbarte Wandelement verschoben worden ist, mit beiden benachbarten Wandelementen zu verbohren und zu verschrauben. Solche Positioniernuten 78 befinden sich auch in der Abschlußwand 26 des Begrenzungsprofils 20 in Fig. 2.

Der Querschnitt des in Fig. 4 gezeigten Paßriegels dient einer hohen Biegefestigkeit sowohl in Querrichtung als auch in Längsrichtung der Trennwand. Selbstverständlich sind im Rahmen der vorliegenden Erfindung auch andere Querschnittsformen für Paßriegel denkbar, beispielsweise solche, die quer zur Wandrichtung schmäler sind und sich beispielsweise auf die Größe der Hohlkammer des gezeigten Riegelbeispiels oder andere schmälere Formen beschränken. Diese Querschnittsveringerung kann sinnvoll sein, um Platz zu schaffen für die bleibende Verschraubung an den Eckverbindungen zwischen den waagerechten und senkrechten Begrenzungsprofilen eines Glaselementes, wenn diese Verschraubung beispielsweise im Bereich der in Fig. 4 und 5 gezeigten kleinen Positioniernuten 78 erfolgt. - Die senkrechten Spannleisten 40 können an ihren unteren Enden z. B. unter 45 ° geneigte Schrägflächen aufweisen, die an erhöhter Stelle von der kleineren Grundfläche des Spannleistentrapezes ausgehen. Diese Abschrägung ermöglicht von vornherein eine für das bestimmungsgemäße Ansetzen des Spannleistenpaares förderliche Ausrichtung auf einem nicht gezeigten unteren Ausgleichsprofil. Dieses kann auf einer verankerten Bodenschiene höhenverstellbar abgestützt und mit einem nach oben weisenden zentrierenden Dachprofil versehen sein.

**Patentansprüche**

**1.** Lösbare Verbindung zwischen den senkrechten Stirnflächen benachbarter Wandabschnitte einer Trennwand, insbesondere Reinraumwand, durch die jeder integrale oder aus niedrigeren Paneel- und/oder Fensterelementen zusammengesetzte raumhohe Wandabschnitt über die Höhe seiner Seitenkanten gegenüber seinem benachbarten Wandabschnitt abgedichtet und bezüglich quer und längs zur Wand gerichteter Kräfte gesichert ist,
gekennzeichnet durch folgende Merkmale:
- Jeder Wandabschnitt (10) ist an seinen senkrechten Stirnseiten (16) durchgehend mit einem in seine Füllung bündig eingesetzten, nach oben und unten offenen Begrenzungsprofil (20) versehen, das in einer nach außen offenen ersten Kammer (22) von beiden Seiten einwärts gerichtete Vorsprünge (28) trägt und eine zweite Kammer (24) als Führung für einen senkrechten Paßriegel (60) zum Verbinden niedrigerer Paneel- und/oder Fensterelemente innerhalb eines Wandabschnittes aufweist;
- die Vorsprünge (28) zweier benachbarter, auf einen vorbestimmten Fugenabstand eingestellter Wandabschnitte (10) sind auf beiden Seiten durch je eine Spannleiste (40) überfaßt, wobei die beiden Spannleisten (40) durch gemeinsame Schrauben (46) als ein sich quer zur Wand spreizendes Leistenpaar bewegbar sind, daß beide Wandabschnitte bei aufrechterhaltenen Fugenabstand verspannt sind;
- der als Zugang zur Betätigung der Spannschrauben (46) dienende Fugenabstand (38) ist seitlich durch die Vorsprünge (28) und in der Tiefe durch die Spannleisten (40) abgeschlossen und durch eine dort eindrückbare Profilleiste (52) abgedichtet.

**2.** Lösbare Verbindung nach Anspruch 1, dadurch gekennzeichnet, daß das insbesondere aus Metall bestehende Begrenzungsprofil (20) mit seinem Umfang in die Füllung (12) des Wandabschnittes (10) eingeklebt und mit den beidseitigen Vorsprüngen (28) der ersten Kammer (22) in der Stirnfläche (16) des Wandabschnittes bündig angeordnet ist.

**3.** Lösbare Verbindung nach Anspruch 2, dadurch gekennzeichnet, daß die Vorsprünge (28) bildenden, quer zur Trennwand verlaufenden Profilwandabschnitte über die Breite des Begrenzungsprofils hinaus nach außen durch Ansätze (34) soweit verlängert sind, daß sie an die Stirnseite (16) der Wand bis zu deren Deckplatten (14) abdecken.

**4.** Lösbare Verbindung nach einem der vorhergehenden Ansprüche, dadurch gekennzeichnet, daß eine Abschlußwand (26) zwischen der ersten und der zweiten Kammer (22 bzw. 24) des Begrenzungsprofils (20) in die zweite Kammer hineinragende Vorsprünge (36) aufweist, die als Führung für einen in ein darüber oder darunter angeordnetes Wandelement verschiebbaren Paßriegel (60) vorgesehen sind.

**5.** Lösbare Verbindung nach Anspruch 1, dadurch gekennzeichnet, daß ein für ein Glaselement bestimmtes Begrenzungsprofil (20) auf beiden Seiten nach außen offene Längsnuten (64) zur Aufnahme einer Gummidichtung (66) aufweist, mit denen das Begrenzungsprofil zwischen den beiden äußeren Glasscheiben (62) abgedichtet gehalten ist, und daß ein zwischen einer Profilseitenwand (30) und der Innenseite der Glasscheiben (62) gebildeter Abstandsraum von der Stirnseite des Glaselements bis zu der die Längsnut (64) abschließenden Querwand (68) mit Silikondichtungsmasse (76) ausgefüllt ist.

**6.** Lösbare Verbindung nach Anspruch 5, dadurch gekennzeichnet, daß an die seitlich am Begrenzungsprofil eingesetzten, jeweils innen am Glas (62) anliegenden Gummidichtungen (66) jeweils eine in den mit Dichtungsmasse (76) auszufüllenden Abstand hineinragende, quer zur Wand verlaufende Lippe (68) angeformt ist.

**7.** Lösbare Verbindung nach einem der Ansprüche 1, 5 und 6, dadurch gekennzeichnet, daß die zweite Kammer (24) des für ein Glaselement bestimmten Begrenzungsprofils zwei parallele Seitenwandabschnitte (72) sowie an der mittleren Abschlußwand (26) angeformte senkrechte Gleitschienen (74) zur reibungsarmen Führung des Paßriegels (60) aufweist.

**8.** Lösbare Verbindung nach einem der vorhergehenden Ansprüche, dadurch gekennzeichnet, daß die mittlere Abschlußwand (26) des Begrenzungsprofils von außen über die erste Kammer (22) zugängliche senkrechte Positionierungsnuten zum Ansetzen eines Bohrers aufweist, um den innerhalb der zweiten Kammer (24) verschiebbaren Paßriegel nach dem Vorschieben bis in das vertikal benachbarte Wandelement zu verbohren und zu verstiften oder zu verschrauben.

**9.** Lösbare Verbindung nach einem der vorhergehenden Ansprüche, dadurch gekennzeichnet, daß die Spannleisten (40) jeweils eine in Richtung auf die zwischen den Wandabschnitten eingestellte Fuge offene Nut (50), insbesondere eine Profilnut zur Aufnahme des profilierten Endes (54) der den Fugenabstand abdichtenden nachgiebigen Profilleiste (52) enthalten.

**10.** Lösbare Verbindung nach einem der vorhergehenden Ansprüche, dadurch gekennzeichnet, daß die Spannleisten (40) an ihrer den Vorsprüngen (28) des Begrenzungsprofils zugekehrten Seite eine Ausnehmung (42) enthalten, die breit genug ist, um beide Vorsprünge (28) der auf den vorbestimmten Fugenabstand zueinander eingestellten Wandabschnitte aufzunehmen.

**11.** Lösbare Verbindung nach einem der vorhergehenden Ansprüche, dadurch gekennzeichnet, daß bei einem an einer Gebäudewand angebrachten oder an einem Trennwanddeckpfosten (86) angeformten Anschlußprofil (82) die Vorsprünge (28) verbreiterte Enden (84) aufweisen, die mit den auf Fugenabstand eingestellten Vorsprüngen (28) des Begrenzungsprofils (20) des angrenzenden Wandabschnittes (10) die Breite der Ausnehmung (42) der Spannleiste gerade ausfüllen und von deren Rändern (44) überfaßt sind.

**12.** Lösbare Verbindung nach einem der vorhergehenden Ansprüche, dadurch gekennzeichnet, daß bei jedem insbesondere wandhohen Spannleistenpaar die unter senkrechten Abständen angeordneten Spannschrauben (46) mit ihrem Kopfende in einer Spannleiste axial fixiert drehbar und mit ihrem Gewinde-Schaftende in einer Gewindebohrung der anderen Spannleiste aufgenommen sind.

**13.** Lösbare Verbindung nach einem der Ansprüche 1 bis 11, dadurch gekennzeichnet, daß die Spannleisten jedes Spannleistenpaares durch unter senkrechten Abständen zueinander angeordnete Führungsstifte höhenmäßig zueinander ausgerichtet und in Spreizrichtung zueinander geführt sind, und daß unter senkrechten Abständen angeordnete Spannschrauben mit ihrem Gewinde-Schaftende in eine Gewindebohrung der einen Spannleiste eingreifen und mit ihrem Kopfende an der anderen Spannleiste anliegen, die in Höhe des jeweiligen Spannschraubenkopfes eine Durchgangsöffnung für einen Profilschlüssel enthält.

Fig. 1
Fig. 2
Fig. 3

16
38
68
70
66
64
62
28
72
74
78
32
24
22
26
50
76
Fig. 4
62
20
78
72
74
46
26
32
30
60
56
62
80
Fig. 5

Europäisches Patentamt

# EUROPÄISCHER RECHERCHENBERICHT

Nummer der Anmeldung

EP 90 12 2602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | BE-A-544 122 (SOC. METALLURGIQUE D. ENGHIEN-SAINT-ELOI) * Seite 4, Absatz 12 - Seite 6, Absatz 3; Abbildungen 1,2,4,7 * | 1 | E04B1/61 |
| A | FR-A-2 474 615 (P. LAMBERET) * Seite 4, Zeile 30 - Seite 5, Zeile 2 * * Seite 5, Zeile 16 - Zeile 24; Abbildungen 1,2 * | 1 | |
| A | CH-A-652 786 (KINSON DEVELOPPEMENTS ET CONSTRUCTIONS S.A.) | | |
| A | US-A-3 854 260 (E. J. O, HANLON) | | |

RECHERCHIERTE SACHGEBIETE (Int. Cl.5 )

E04B

Der vorliegende Recherchenbericht wurde für alle Patentansprüche erstellt

| Recherchenort | Abschlußdatum der Recherche | Prüfer |
|---|---|---|
| DEN HAAG | 18 JULI 1991 | KAPPOS A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)